# EUROPÄISCHE PATENTSCHRIFT

(11) **EP 4 088 958 B1**
(45) Veröffentlichungstag und Bekanntmachung des Hinweises auf die Patenterteilung: **07.05.2025**
(21) Anmeldenummer: 22172416.4
(22) Anmeldetag: 09.05.2022
(51) Int. Cl.: B60J 7/16

(54) **VERSTEIFUNGSSTRUKTUR FÜR EIN AUFSTELLDACH EINES FREIZEITFAHRZEUGS SOWIE FREIZEITFAHRZEUG MIT EINER SOLCHEN VERSTEIFUNGSSTRUKTUR**
REINFORCEMENT STRUCTURE FOR A POP-UP ROOF OF A LEISURE VEHICLE AND LEISURE VEHICLE WITH SUCH A REINFORCEMENT STRUCTURE
STRUCTURE DE RENFORT POUR UN TOIT OUVRANT D'UN VÉHICULE DE LOISIRS, AINSI QUE VÉHICULE DE LOISIRS COMPORTANT UNE TELLE STRUCTURE DE RENFORT

(30) Priorität: 10.05.2021 DE 102021112191
(43) Veröffentlichungstag der Anmeldung: 16.11.2022
(73) Patentinhaber: Dethleffs GmbH & Co. KG, 88316 Isny im Allgäu (DE)
(72) Erfinder: Plische, Erik, 87547 Missen-Willhams (DE); Schuster, Thomas, 88138 Hergenweiler (DE)
(74) Vertreter: Müller Schupfner & Partner Patent- und Rechtsanwaltspartnerschaft mbB (Muc)

(56) Entgegenhaltungen:
- GB-A- 2 494 750
- GB-A- 2 556 350
- JP-A- H09 272 463

## Beschreibung

Die Erfindung betrifft eine Versteifungsstruktur für ein Aufstelldach eines Freizeitfahrzeugs sowie ein Freizeitfahrzeug mit einer solchen Versteifungsstruktur. Im Stand der Technik sind Freizeitfahrzeuge bekannt. Unter einem Freizeitfahrzeug wird ein Fahrzeug oder Anhänger verstanden, welches oder welcher zumindest ein mobil einsetzbares Element zum Camping aufweist oder zumindest temporär eine Einrichtung zum Campen aufweisen kann. Unter einem Freizeitfahrzeug wird insbesondere ein Campingfahrzeug verstanden. Unter einem Freizeitmobil wird ein motorisiertes Freizeitfahrzeug verstanden. Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil. Ein Wohnwagen kann zum Beispiel alternativ als Caravan oder Campinganhänger bezeichnet werden. Unter einem Campervan wird vorliegend ein Freizeitfahrzeug, insbesondere Freizeitmobil, verstanden, welches aus einem Transportfahrzeug mit serienmäßiger Karosserie gebildet ist, insbesondere einer Blechkarosserie.

Im Stand der Technik sind Freizeitfahrzeuge, insbesondere Wohnmobile, mit Aufstelldach oder Schlafdach bekannt, wie z.B. aus GB 2 556 350 A oder GB 2 494 750 A bekannt. Hierzu wird das Fahrzeugdach des Freizeitfahrzeugs in der Regel großflächig aufgeschnitten, wodurch die Steifigkeit des Fahrzeugdaches deutlich herabgesetzt wird.

Als Aufstelldach wird das Dach eines Freizeitfahrzeugs bezeichnet, welches bei Stillstand des Fahrzeugs bzw. Wohnanhängers nach oben geklappt werden kann, um eine Höhe des Innenraums zu erhöhen und/oder zusätzlichen Aufenthaltsraum oberhalb der eigentlichen Höhe des Freizeitfahrzeugs zu schaffen. Ein Aufstelldach kann auch als Hubdach bezeichnet werden.

Eine Aufgabe der vorliegenden Erfindung liegt darin, den Stand der Technik zu verbessern. Es ist insbesondere eine Aufgabe der Erfindung, eine Versteifungsstruktur für einen Aufstelldach eines Freizeitfahrzeugs bereitzustellen, welche an einem aufgeschnittenen Fahrzeugdach befestigt werden kann. Die Versteifungsstruktur soll an unterschiedliche Längen des aufgeschnittenen Fahrzeugdachs, des Aufstelldachs oder des Freizeitfahrzeugs anpassbar sein. Die Versteifungsstruktur soll ferner an unterschiedliche Fahrzeugtypen anpassbar sein. Ferner liegt eine Aufgabe der Erfindung darin, dass in der Versteifungsstruktur eine umlaufende und lückenlose Kleberaupe realisierbar ist.

Diese Aufgabe wird durch eine Versteifungsstruktur mit den Merkmalen des unabhängigen Patentanspruchs 1 wie auch des unabhängigen Patentanspruchs 4 gelöst. Vorteilhafte Weiterbildungen der Erfindung sind in den Unteransprüchen angegeben.

Folgendes Begriffliche sei erläutert:
Unter einem Profil kann vorliegend ein Konstruktionsprofil verstanden werden, d.h. ein im Strangpressverfahren hergestelltes längliches Halbzeug. Solche Profile werden meist aus Aluminium, seltener aus anderen Metallen gefertigt. Konstruktionsprofile aus Aluminium stehen einerseits in Konkurrenz zu Profilstählen, andererseits kann je nach Aufgabenstellung ein Mix aus beiden Werkstoffen die beste Lösung darstellen, z. B. Gestellkonstruktion aus Aluminiumprofil mit Versteifungselementen aus Stahlblechen.

Eine "Längsseite einer Karosserie" dient der Befestigung der Versteifungsstruktur. Der weggeschnittene Teil des ursprünglichen Daches war ursprünglich mit dieser verbunden.

Die erfindungsgemäße Versteifungsstruktur dient dazu, die durch das Aufschneiden des Fahrzeugdaches herabgesetzte Steifigkeit des Daches zu erhöhen. Dazu wird bevorzugt an beiden Längsseiten des durch das Aufschneiden entstandenen Loches im Dach jeweils eine Versteifungsstruktur angebracht, wobei die beiden Versteifungsstrukturen symmetrisch zu einer Fahrzeugmittellinie gefertigt sein können. An geeigneten Stellen entlang der Längsachse des Freizeitfahrzeugs, bevorzugt an einem vorderen und eine einem hinteren Ende wird bevorzugt zwischen den beiden Versteifungsstrukturen jeweils eine Dachplatte, bevorzugt eine Aluminium-Sandwichplatte, angebracht. Die so entstandene rechteckige Versteifungsstruktur, welche angrenzend zu dem aufgeschnittenen Loch im Dach angebracht ist, bewirkt eine deutliche Verstärkung der Dachstruktur, sodass nun an oder auf dieser Verstärkungsstruktur weitere Aufbauten wie zum Beispiel eine aufklappbare Dachschale des Aufstelldachs angebracht werden können und der Festigkeitsverlust der Karosserie des Fahrzeugs zumindest zum Teil ausgeglichen wird.

Die erfindungsgemäße Versteifungsstruktur kann vorteilhafterweise an unterschiedliche Längen des aufgeschnittenen Fahrzeugdachs, des Aufstelldachs oder des Freizeitfahrzeugs angepasst werden, insbesondere indem das Profil als Meterware auf die benötigten Längen zugeschnitten werden kann.

Die Verstärkungsstruktur ist bevorzugt aus Aluminium gefertigt. Bevorzugt ist die Versteifungsstruktur mithilfe eines Strangpressverfahrens gefertigt.

Die Dachplatte ist bevorzugt eine Leichtbauplatte. Bevorzugt können mindestens zwei Dachplatten verwendet werden, wobei jede Dachplatte zwischen dem ersten und dem zweiten Profil befestigt ist und wobei das erste Profil symmetrisch zu dem zweiten Profil gefertigt ist. Hierbei sind das erste Profil und das zweite Profil zu einer Ebene spiegelsymmetrisch, welche von der Fahrtrichtung des Freizeitfahrzeugs und einer vertikal verlaufenden Hochachse aufgespannt wird.

Das erste Befestigungselement und / oder das zweite Befestigungselement verlaufen bei bestimmungsgemäßem Gebrauch der Versteifungsstruktur waagerecht. Unter dem bestimmungsgemäßen Gebrauch der Versteifungsstruktur wird diejenige Position und Lage verstanden, welche die Versteifungsstruktur im eingebauten Zustand innehat.

Gemäß einer bevorzugten Ausführungsform ist das zweite Befestigungselement bei bestimmungsgemäßem Gebrauch der Versteifungsstruktur oberhalb des ersten Befestigungselements angeordnet. Dies ist vorteilhaft, da das zweite Befestigungselement an der Dachplatte zu befestigen ist, welche in der Regel oberhalb der Karosserie, insbesondere dem Teil der Karosserie, an welchem das erste Befestigungselement zu befestigen ist.

Bevorzugt wird unter dem Ausdruck, dass das zweite Befestigungselement oberhalb des ersten Befestigungselements angeordnet ist, verstanden, dass eine vertikale Mitte des zweiten Befestigungselements oberhalb der vertikalen Mitte des ersten Befestigungselements angeordnet ist. Hierunter kann auch verstanden werden, dass ein unteres Ende des zweiten Befestigungselements oberhalb des oberen Endes des ersten Befestigungselements angeordnet.

Gemäß einer weiteren bevorzugten Ausführungsform weist das Profil ein Basiselement auf. Hierbei ist das erste Befestigungselement an einer Außenseite des Basiselements und das zweiten Befestigungselement an einer Innenseite des Basiselements angeordnet oder befestigt. Hierbei zeigt die Außenseite des Basiselements zu einer Außenseite des Freizeitfahrzeugs und die Innenseite des Basiselements zu einer Innenseite bzw. Mitte des Freizeitfahrzeugs, welche bevorzugt durch eine Mittelebene des Freizeitfahrzeugs definiert ist.

Gemäß noch einer weiteren, bevorzugten Ausführungsform weist das Basiselement einen kammerartigen Profilabschnitt auf, welcher dergestalt ist, dass er an einem Längsende der Versteifungsstruktur an einem, insbesondere parallel zur Querrichtung des Freizeitfahrzeugs verlaufenden, weiteren Bauteil befestigbar ist, insbesondere einem Spoiler.

Unter einem kammartigen Profilabschnitt wird vorliegend ein Teil eines Profils verstanden, welcher eine kammerartige Form hat und insbesondere einen viereckigen oder polygonalen Querschnitt aufweist. Ein solcher kammartigen Profilabschnitt weist vorteilhafterweise sowohl eine hohe Stabilität als auch ein geringes Gewicht auf. Darüber hinaus weist der kammerartige Profilabschnitt den Vorteil auf, dass an einem geöffneten Abschnitt des kammerartigen Profilabschnitt, welcher zum Beispiel aufgefräst sein kann, in einfacher Art und Weise andere Bauteile befestigt werden können.

Bevorzugt ist das zweite Befestigungselement an dem kammerartigen Profilabschnitt, insbesondere an einer seitlichen Außenwand, insbesondere der Innenseite, des kammerartigen Profilabschnitts des Basiselements befestigt.

Die Aufgabe wird auch gelöst durch eine Versteifungsstruktur mit den Merkmalen des unabhängigen Patentanspruchs 4.

Vorteilhaft kann durch einen Eckverbinder, beispielsweise aus Aluminiumdruckguss, der mit Einsetztabschnitten in Hohlprofile des Profils hineingeschoben wird eine steife und Kräfte übertragende Verbindung zwischen dem Profil und dem Eckverbinder hergestellt werden. Dabei kann dieser Einsatzabschnitt über eine gewisse Länge zumindest über drei Linien oder Flächen fixiert werden. Bevorzugt wird er jedoch in ein geschlossenes Hohlprofil eingeschoben, dem er in seiner Querschnittsform entspricht.

Gemäß noch einer weiteren, bevorzugten Ausführungsform weist das Basiselement einen Profilabschnitt zur Befestigung einer Innenraumverkleidung des Freizeitfahrzeugs, eines Zubehörteils, der Dachplatte oder einer Querversteifung der Dachplatte auf. Hierdurch wird vorteilhafterweise erreicht, dass die Versteifungsstruktur auch zur Befestigung von Innenraumverkleidung genutzt werden kann.

Das erste Befestigungselement ist bevorzugt an dem Profilabschnitt zur Befestigung und/oder an dem kammerartigen Profilabschnitt befestigt, insbesondere an einer Außenseite des Profilabschnitt zur Befestigung und / oder des kammerartigen Profilabschnitts.

Gemäß einer anderen Ausführungsform weist der Profilabschnitt zur Befestigung einer Innenraumverkleidung des Freizeitfahrzeugs, eines Zubehörteils, der Dachplatte oder einer Querversteifung der Dachplatte ein C-Profil oder eine C-Schiene auf. An dem C-Profil können vorteilhafterweise eine Vielzahl von unterschiedlichen Befestigungselementen, wie zum Beispiel T-förmige Nutensteine, Gleitmuttern, Hammerkopfschrauben etc. befestigt werden, um zum Beispiel Elemente der Innenraumverkleidung dort zu befestigen.

Gemäß einer anderen, bevorzugten Ausführungsform ist der Profilabschnitt zur Befestigung einer Innenraumverkleidung des Freizeitfahrzeugs, eines Zubehörteils, der Dachplatte oder einer Querversteifung der Dachplatte bei bestimmungsgemäßem Gebrauch der Versteifungsstruktur unterhalb des kammerartigen Profilabschnitts angeordnet. Diese Anordnung ist vorteilhaft, zweckmäßig und platzsparend, da der Innenraum unterhalb der Dachplatte bzw. des Dachs angeordnet ist.

Erfindungsgemäß ist eine Unterseite des ersten Befestigungselements an der Karosserie befestigbar, insbesondere verklebbar. Gemäß der Erfindung weist das erste Befestigungselement einen zweiten kammerartigen Profilabschnitt auf, dessen Unterseite so ausgeführt und eingerichtet ist, dass sie an der Karosserie befestigbar, insbesondere verklebbar, ist. Hierzu weist das erste Befestigungselement an der Unterseite einen Klebeflansch auf.

Gemäß einer weiteren Ausführungsform ist an der Außenseite des zweiten kammerartigen Profilabschnitts ein Aufnahmeelement für eine Dichtung, insbesondere eine Gummidichtung, angeordnet. Bevorzugt weist das Aufnahmeelement einen unten geöffneten Kanal auf, in den von unten eine Dichtung, insbesondere eine Gummidichtung, eingeführt, insbesondere festgesteckt, werden kann.

Gemäß einer weiteren, bevorzugten Ausführungsform ist das Profil zur Befestigung an der Längsseite der Karosserie und zur Befestigung an der Dachplatte, insbesondere senkrecht zur Längsrichtung, gebogen. Bevorzugt wird das durch ein Strangpressverfahren gefertigte Profil mithilfe eines CNC-Biegeverfahrens gebogen, so dass die Versteifungsstruktur an die Form der Karosserie angepasst ist.

Gemäß einer weiteren Ausführungsform weist der kammerartige Profilabschnitt des Basiselements bei bestimmungsgemäßem Gebrauch der Versteifungsstruktur an einer Oberseite eine Nut zur Aufnahme eines Kederprofils auf. In der Nut kann zum Beispiel ein Kederprofil oder eine Kederschiene eines Faltenbalgs oder Zeltbalgs des Aufstelldachs reversibel lösbar befestigt werden.

Bevorzugt ist an einer Unterseite des zweiten kammerartigen Profilabschnitts des ersten Befestigungselements mindestens eine Ausnehmung zur Herstellung einer formschlüssigen Verbindung mit einem Dachabschnitt des Freizeitfahrzeugs angeordnet. Bevorzugt sind entlang einer Längsrichtung des Profils an unterschiedlichen Stellen an der Unterseite des zweiten kammerartigen Profilabschnitts eine Vielzahl von Ausnehmungen, zum Beispiel Kammern, eingefräst. Mehrere Freizeitfahrzeuge haben auf der Karosserie serienmäßig Laschen. Die Ausnehmung dient der Herstellung einer formschlüssigen Verbindung mit einer solchen Lasche. An einer solchen Lasche kann die Versteifungsstruktur, insbesondere das erste Befestigungselement, mit der Lasche verschraubt werden. Im Stahlbau versteht man unter einer Lasche ein flächiges Materialstück, insbesondere mit Befestigungslöchern, mit dem zwei Bauteile, z. B. Stahlträger, mittels Schrauben und Muttern oder auch durch Niete verbunden werden.

Gemäß einer anderen, bevorzugten Ausführungsform weist die Versteifungsstruktur ferner einen Eckverbinder zur Verbindung der Versteifungsstruktur mit einer parallel zur Querrichtung des Freizeitfahrzeugs verlaufenden Dachplatte auf.

Der Eckverbinder wird bevorzugt im Druckguss hergestellt, bevorzugt aus Aluminium. Bevorzugt dient der Eckverbinder der formschlüssigen Verbindung zwischen einer Dachplatte, bevorzugt einer Dachplatte an einem vorderen Ende des Dachbereichs, und der Versteifungsstruktur, sei es an einer in Fahrtrichtung gesehen linken oder rechten Längsseite des Dachs.

An einem Längsende des Eckverbinders wird mindestens eine Lasche des Eckverbinders in mindestens einen kammerartigen Profilabschnitt gesteckt und verschraubt. An einer Unterseite weist der Eckverbinder einen Klebeflansch zum Verkleben mit der Karosserie auf. Ferner weist eine Oberseite des Eckverbinders Verschraubpunkte, bevorzugt mit Positionierhilfen, auf, an denen der Eckverbinder mit einer Dachplatte verschraubbar ist.

Bevorzugt weist die Versteifungsstruktur zwei symmetrisch gefertigte Eckverbinder auf, welche bevorzugt eine vordere Dachplatte mit zwei symmetrisch gefertigten und an jeweils einer Längsseite der Karosserie angebrachten Profilen verbindet. Hierbei ist weiter bevorzugt, dass diese Versteifungsstruktur eine hintere Dachplatte aufweist, welche am hinteren Enden der beiden Profile zwischen den beiden Profilen angeordnet ist. Hierbei ist weiter bevorzugt, dass an den hinteren Enden der beiden Profile ein, insbesondere parallel zur Querrichtung des Freizeitfahrzeugs verlaufendes, weiteres Bauteil, insbesondere ein Spoiler, befestigt ist.

Hierbei ist bevorzugt ein parallel zur Längsachse des Freizeitfahrzeug verlaufendes Bauelement des weiteren Bauteils, insbesondere des Spoilers, in den kammerartigen Profilabschnitt des Basiselement eingeführt und befestigt.

Gemäß noch einer weiteren Ausführungsform weist das zweite Befestigungselement einen dritten kammerartigen Profilabschnitt auf, in welchem nach teilweiser Entfernung einer Kammerwandung des dritten kammerartigen Profilabschnitts die Dachplatte befestigbar ist. Bevorzugt ist der dritte kammerartige Profilabschnitt an einer Außenwand des ersten kammerartigen Profilabschnitts angebracht. Bevorzugt ist eine Höhe des dritten kammerartigen Profilabschnitts kleiner als eine Höhe des ersten kammerartigen Profilabschnitts. Bevorzugt wird eine zur Innenseite zeigende Wandung und / oder eine untere Wandung entfernt, um eine Dachplatte im Inneren des dritten kammerartigen Profilabschnitts zu befestigen, insbesondere zu verkleben.

Gemäß einer anderen Ausführungsform entspricht eine Länge des Profils einer vorgegebenen Länge eines Freizeitfahrzeugs. Hierdurch wird vorteilhafterweise erreicht, dass für Freizeitfahrzeuge mit einer beliebigen vorgegebenen Länge eine erfindungsgemäße Versteifungsstruktur gefertigt werden kann.

Gemäß einer weiteren Ausführungsform weist die Versteifungsstruktur ferner ein zweites Profil auf, welches spiegelsymmetrisch zum Profil angefertigt ist. Hierbei sind das Profil und das zweite Profil zu einer Ebene spiegelsymmetrisch, welche von der Fahrtrichtung und einer vertikal verlaufenden Hochachse aufgespannt wird.

In einem weiteren Aspekt wird die Erfindung gelöst durch ein Freizeitfahrzeug mit einer oben beschriebenen Versteifungsstruktur.

Ausführungsbeispiele der Erfindung sind in den Zeichnungen dargestellt und werden in der nachfolgenden Beschreibung näher erläutert.
Figur 1 zeigt eine Abbildung eines Schnitts durch eine Versteifungsstruktur gemäß einer Ausführungsform der Erfindung.
Figur 2 zeigt die Versteifungsstruktur der Figur 1 in einer dreidimensionalen Darstellung.
Figur 3 zeigt ein Freizeitfahrzeug mit einer Versteifungsstruktur gemäß einer Ausführungsform der Erfindung.
Figur 4 zeigt eine dreidimensionale Schnittansicht durch eine mit einer Dachplatte, einem Spoiler und einer Karosserie verbundenen Versteifungsstruktur gemäß einer Ausführungsform der Erfindung.
Figur 5 zeigt eine Schnittansicht entlang einer zur Längsachse des Freizeitfahrzeugs parallelen Ebene durch die Versteifungsstruktur und die Karosserie an einer Lasche der Karosserie.
Figur 6 zeigt eine Verbindung einer Dachplatte mit der Versteifungsstruktur mithilfe eines Eckverbinders.
Figur 7 und 8 zeigen den in Figur 6 dargestellten Eckverbinder.

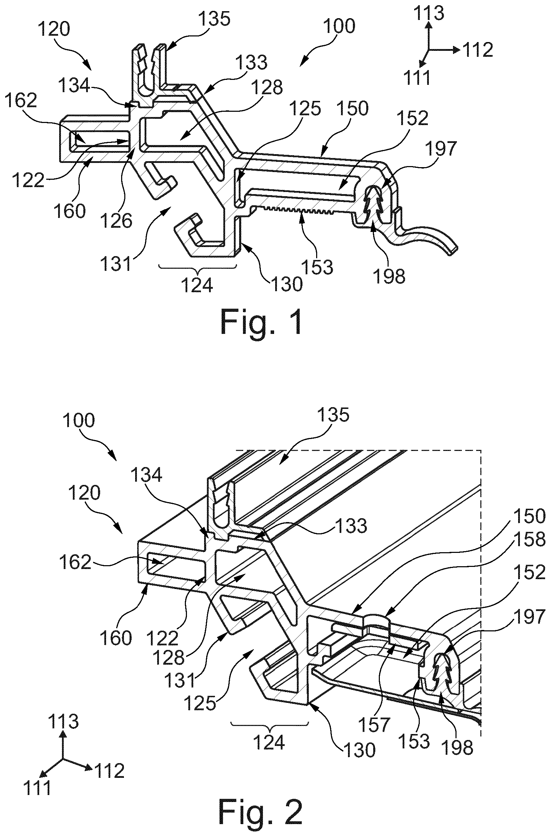

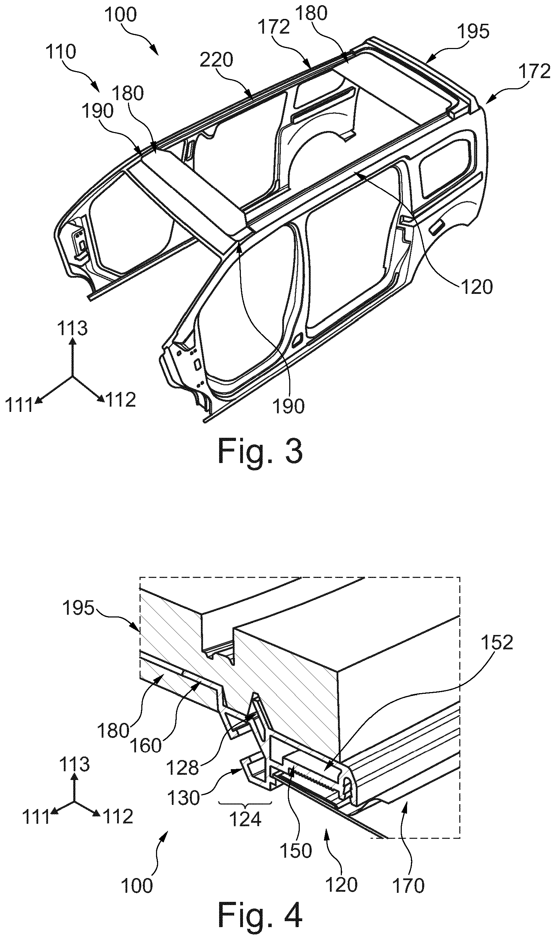

Figur 1 zeigt eine Versteifungsstruktur 100 für ein Aufstelldach eines in Figur 3 abgebildeten Freizeitfahrzeugs 110. Die Versteifungsstruktur 100 weist ein durch ein Strangpressverfahren hergestelltes Profil 120 auf, an dem ein Kederprofil 135 und eine Dichtung 198 befestigt sind. Das Profil 120 ist ein Aluminium-Leichtbau-Profil.

Das Profil 120 dient der Befestigung an einer der Längsseiten 172 einer Karosserie 170 des Freizeitfahrzeugs 110 sowie der Befestigung an einer Dachplatte 180, wie in Figur 3 zu sehen. In Figur 3 sieht man eine Versteifungsstruktur 100, welche das Profil 120, ein zweites Profil 220, welches spiegelsymmetrisch zum Profil 120 gefertigt ist, eine vordere Dachplatte 180 sowie eine hintere Dachplatte 180, zwei Eckverbinder 190 und einen Spoiler 195, insbesondere einen Heckspoiler, aufweist.

Hierbei sind das Profil 120 und das zweite Profil 220 zu einer Ebene spiegelsymmetrisch, welche von der Fahrtrichtung 111 und einer vertikal verlaufenden Hochachse 113 aufgespannt wird.

Die hintere Dachplatte 180 ist zwischen dem ersten Profil 120 und dem zweiten Profil 220 befestigt. Die beiden Eckverbinder 190 sind jeweils mit dem Profil 120 bzw. dem zweiten Profil 220 verbunden und die vordere Dachplatte 180 ist an den beiden Eckverbinder 190 befestigt. Der Spoiler 195 ist an jeweils einem hinteren Ende des Profils 120 bzw. des zweiten Profil 220 mit dem jeweiligen Profil 120, 220 verbunden.

Die hintere Dachplatte 180 und oder die vordere Dachplatte 180 sind Aluminium-Sandwichplatten.

Wie in Figur 1 zu sehen ist, weist das Profil 120 ein in der Mitte angebrachtes Basiselement 124, ein erstes Befestigungselement 150 zur Befestigung an der Längsseite 172 der Karosserie 170 und ein zweites Befestigungselement 160 zur Befestigung an der Dachplatte 180 auf, wobei das zweite Befestigungselement 160 an dem Profil 120 an einer dem ersten Befestigungselement 150 gegenüberliegenden Position 122 befestigt ist.

Das erste Befestigungselement 150 ist an einer Außenseite 125 des Basiselements 124 und das zweite Befestigungselement 160 an einer Innenseite 126 des Basiselements 124 befestigt. Hierbei zeigt die Außenseite 125 zu einer Außenseite des Freizeitfahrzeugs 110 und die Innenseite 126 zu einer Mitte des Freizeitfahrzeugs, d. h. zur Dachplatte 180. Sowohl das erste Befestigungselement 150 als auch das zweite Befestigungselement 160 verlaufen bei bestimmungsgemäßem Gebrauch im Wesentlichen waagerecht.

Das Basiselement 124 weist an einem oberen Ende einen kammerartigen Profilabschnitt 128 und unter dem kammerartigen Profilabschnitt 128 einen C-Profil 131 aufweisenden Profilabschnitt 130 auf, an dem eine Innenraumverkleidung des Freizeitfahrzeugs 110 befestigbar ist. Der Innenraum des Freizeitfahrzeugs 110 befindet sich von dem Profilabschnitt 130 aus gesehen in der Ansicht der Figur 1 links unten. Der kammerartige Profilabschnitt 128 und der Profilabschnitt 130 weisen entlang der Querrichtung 112 dieselbe Breite auf. Der kammerartige Profilabschnitt 128 weist einen im Wesentlichen sechseckigen hohlen Querschnitt auf. Hierbei ist ein linker Teil des kammerartigen Profilabschnitts 128 im Wesentlichen rechteckig, wobei ein rechtes Ende des kammerartigen Profilabschnitts 128, d. h. eine rechts vertikal verlaufende Wandung, deutlich unterhalb der linken Wandung des kammerartigen Profilabschnitts 128 verläuft. Ein oberes Ende der rechten Wandung des kammerartigen Profilabschnitts 128 entspricht in etwa einem unteren Ende der linken Wandung des kammerartigen Profilabschnitts 128. Dies liegt darin begründet, dass die Dachplatte 180, welche an dem zweiten Befestigungselement 160 befestigt ist, vertikal höher liegt als die Karosserie 170 des Freizeitfahrzeug 110, welche an dem ersten Befestigungselement 150 befestigt ist.

Die Achse des Profils 120 verläuft im Wesentlichen parallel zu einer Längsachse 111 des Freizeitfahrzeugs 110. Eine Querachse 112, welche von einer rechten zu einer linken Seite des Freizeitfahrzeugs 110 zeigt, ist zusammen mit einer Hochachse 113 in Figur 3 abgebildet.

Das erste Befestigungselement 150 ist an dem Profilabschnitt 130 und am kammerartigen Profilabschnitt 128 befestigt. Hierbei ist die untere Wandung des kammerartigen Profilabschnitts 128 identisch mit der oberen Wandung des Profilabschnitts 130.

Das zweite Befestigungselement 160 weist einen dritten kammerartigen Profilabschnitt 162 auf. Das zweite Befestigungselement 160 ist an einer Innenseite 126 des Basiselements 124 an einer Wandung des kammerartigen Profilabschnitts 128 befestigt. Hierbei ist eine untere Wandung des zweiten Befestigungselements 160 auf derselben Höhe wie eine zur Innenseite 126 zeigende untere Wandung des kammerartigen Profilabschnitts 128. Eine Höhe des zweiten Befestigungselements 160 ist niedriger als die zur Innenseite 126 zeigende Höhe des kammerartigen Profilabschnitts 128. Um eine Dachplatte 180 an dem zweiten Befestigungselement 160 zu befestigen, wird die zur Innenseite zeigende Wandung als auch die untere Wandung des zweiten Befestigungselements 160 entfernt und die Oberseite der Dachplatte 180 mit einer Unterseite der oberen Wandung des zweiten Befestigungselement 160 verklebt, wie in Figur 4 zu sehen.

Das erste Befestigungselement 150 weist einen zweiten kammerartigen Profilabschnitt 152 auf, dessen Unterseite 153 einen Klebeflansch aufweist, so dass die Unterseite 153 mit Teilen der Karosserie 170 verklebbar ist.

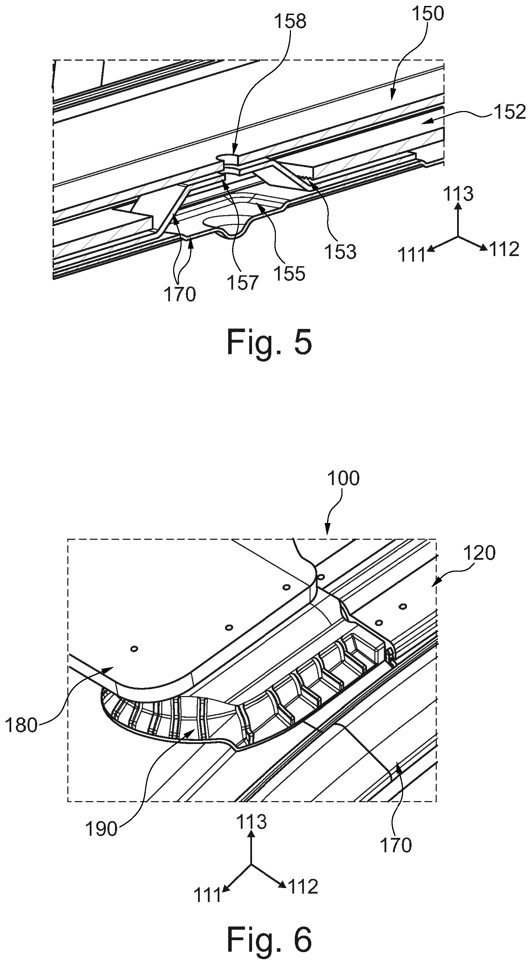

An der Unterseite 153 des zweiten kammerartigen Profilabschnitts 152 des ersten Befestigungselements 150 sind entlang der Längsachse 111 des Profils 120 eine Vielzahl von Ausnehmungen 155 zur Herstellung einer formschlüssigen Verbindung mit Laschen 157 der Karosserie 170 des Freizeitfahrzeugs 110 angeordnet, siehe Figur 5. An den Positionen von Löchern 158, welche in eine Oberseite des zweiten kammerartigen Profilabschnitts 152 eingearbeitet sind, wird das erste Befestigungselement 150 mit den Laschen 157 der Karosserie 170 verschraubt.

Eine Oberseite des zweiten kammerartigen Profilabschnitts 152 des ersten Befestigungselements 150 hat weiterhin die Funktion einer Wasserbarriere sowie einer Schraubfläche für Anbauteile wie z.B. Kinematik, Gasdruckdampfer oder Verschlusssystem.

An einer Außenseite des zweiten kammerartigen Profilabschnitts 152 bzw. des ersten Befestigungselements 150 ist ein Aufnahmeelement 197 für eine Dichtung 198, insbesondere eine Gummidichtung, angeordnet, siehe Figuren 1 und 2. Das Aufnahmeelement 197 hat die Form eines nach unten geöffneten Kanals, in die die Dichtung 198 eingeführt wird.

Das Profil 120 ist mithilfe eines CNC-Biegeverfahrens entlang der Längsrichtung gebogen, so dass es an die Form der Karosserie 170 angepasst ist. Hierbei wird das Profil 120 zuerst stranggepresst und danach mithilfe des CNC-Verfahrens gebogen. Das zweite Profil 220 ist ähnlich wie das Profil 120, jedoch spiegelsymmetrisch zur oben genannten Ebene gefertigt.

Der kammerartige Profilabschnitt 128 des Basiselement 124 weist an einer Oberseite 133 eine entlang der Längsachse des Profils 120 verlaufende Nut 134 zur Aufnahme eines Kederprofil 135 auf. Das Kederprofil 135 gehört zu einem Faltenbalg oder einem Zeltbalg des Aufstelldachs.

Die Breite von außen nach innen des Kederprofil 135 ist genau so groß wie die obere Breite der Oberfläche des kammerartigen Profilabschnitts 128. Das Kederprofil 135 bildet auch eine Wasserbarriere zwischen der Innen- und Außenseite der Versteifungsstruktur 100.

Figur 4 zeigt ein heckseitiges Ende des Profils 120, wo ein parallel zur Querrichtung 112 des Freizeitfahrzeugs 110 verlaufender Spoiler 195 mit dem Profil 120 verbunden ist. Hierzu ist die obere Wandung des kammerartigen Profilabschnitts 128 entfernt worden, sodass ein Teil des Spoilers 195 in den kammerartigen Profilabschnitt 128 eingreifen kann. Ferner hat eine Unterseite des Spoilers 195 eine solche Oberfläche, dass der Spoiler 195 mit der Oberseite des ersten Befestigungselements 150 und der Oberseite des zweiten Befestigungselements 160 verklebt werden kann.

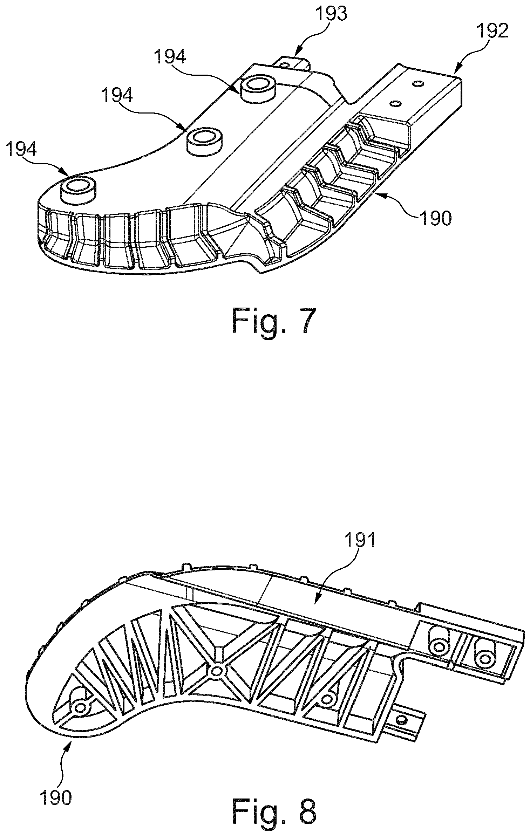

In den Figuren 6 bis 8 ist zu sehen, wie die vordere Dachplatte 180 mithilfe eines Eckverbinders 190 mit einem Frontende des Profils 120 verbunden wird. Der in den Figuren 7 und 8 von oben und unten abgebildete Eckverbinder 190 wird an den Laschen bzw. Einsetzabschnitten 192 und 193 in das Profil 120 gesteckt. Hierbei wird der Einsetzabschnitt 192 in den zweiten kammerartigen Profilabschnitt 152 des ersten Befestigungselements 150 und der Einsetzabschnitt 193 in den dritten kammerartigen Profilabschnitt 162 des zweiten Befestigungselements 160 gesteckt und mit dem Profil 120 verschraubt. Die Unterseite des Eckverbinders 190 wird an einem Klebeflansch 191 auf die Karosserie 170 geklebt. An drei Verschraubungspunkten 194 wird der Eckverbinder 190 mit der vorderen Dachplatte 180 verschraubt. Ein weiterer Eckverbinder 190, welcher symmetrisch zu dem in Figur 6 dargestellten Eckverbinder 190 gefertigt ist, wird auf entsprechende Weise mit der vorderen Dachplatte 180 und dem zweiten Profil 220 verbunden.

Einer der großen Vorteile der Verstärkungsstruktur 100 liegt darin, dass die Länge des Profils 120 und des zweiten Profils 220 an die Länge des Freizeitfahrzeugs 110 bzw. der Länge der Karosserie 170 angepasst werden kann. Dadurch, dass das Profil 120 und das zweite Profil 220 mithilfe eines CNC- Verfahrens gebogen werden können, können das Profil 120 und das zweite Profil 220 auch an unterschiedliche Typen von Freizeitfahrzeugen angepasst werden.

## Patentansprüche

1. Versteifungsstruktur (100) für ein Aufstelldach eines Freizeitfahrzeugs (110) mit einem Profil (120) zur Befestigung an einer Längsseite (172) einer Karosserie (170) und zur Befestigung an einer Dachplatte (180), wobei das Profil (120) aufweist:
ein erstes Befestigungselement (150) zur Befestigung an der Längsseite (172) der Karosserie (170); und
ein zweites Befestigungselement (160) zur Befestigung an der Dachplatte (180), wobei das zweite Befestigungselement (160) an dem Profil (120) an einer dem ersten Befestigungselement (150) gegenüberliegenden Position (122) befestigt ist,
**dadurch gekennzeichnet,**
**dass** das erste Befestigungselement (150) einen zweiten kammerartigen Profilabschnitt (152) aufweist, dessen Unterseite (153) so ausgeführt und
eingerichtet ist, dass sie an der Karosserie (170) befestigbar, insbesondere verklebbar, ist.

2. Versteifungsstruktur (100) nach Anspruch 1,
**dadurch gekennzeichnet, dass**
das Profil (120) ein Basiselement (124) aufweist,
wobei das erste Befestigungselement (150) an einer Außenseite (125) des Basiselements (124) und das zweiten Befestigungselement (160) an einer Innenseite (126) des Basiselements (124) angeordnet oder befestigt ist.

3. Versteifungsstruktur (100) nach einem der vorangegangenen Ansprüche,
**dadurch gekennzeichnet, dass**
das zweite Befestigungselement (160) bei bestimmungsgemäßem Gebrauch oberhalb des ersten Befestigungselements (150) angeordnet ist.

4. Versteifungsstruktur (100) für ein Aufstelldach eines Freizeitfahrzeugs (110) mit einem Profil (120) zur Befestigung an einer Längsseite (172) einer Karosserie (170) und zur Befestigung an einer Dachplatte (180), wobei das Profil (120) ein erstes Befestigungselement (150) zur Befestigung an der Längsseite (172) der Karosserie (170) aufweist,
**dadurch gekennzeichnet,**
**dass** das Profil (120) mit einem Eckverbinder (190) zur Verbindung der Versteifungsstruktur (100) mit einer parallel zur Querrichtung (112) des Freizeitfahrzeugs (110) verlaufenden Dachplatte (180), durch Einsetzen des Eckverbinders in Hohlprofile des Profils verbunden ist, bevorzugt durch mindestens drei gegenüberstehende Flächen einen Einsetzabschnitt des Eckverbinders haltende Hohlprofile, ganz bevorzugt geschlossene Hohlprofile.

5. Versteifungsstruktur (100) nach Anspruch 4,
**dadurch gekennzeichnet, dass**
das Profil (120) ein Basiselement (124) aufweist,
wobei das erste Befestigungselement (150) an einer Außenseite (125) des Basiselements (124) angeordnet oder befestigt ist.

6. Versteifungsstruktur (100) mit den Merkmalen von einem der Ansprüche 1 bis 3 und mit den Merkmalen von einem der Ansprüche 4 oder 5.

7. Versteifungsstruktur (100) nach einem der Ansprüche 2, 3, 5 oder 6
**dadurch gekennzeichnet, dass**
das Basiselement (124) einen kammerartigen Profilabschnitt (128) aufweist, welcher dergestalt ist, dass er an einem Längsende der Versteifungsstruktur (100) an einem, insbesondere parallel zur Querrichtung (112) des Freizeitfahrzeugs verlaufenden, weiteren Bauteil befestigbar ist, insbesondere einem Spoiler (195).

8. Versteifungsstruktur (100) nach einem der Ansprüche 2, 3, 5, 6 oder 7,
**dadurch gekennzeichnet, dass**
das Basiselement (124) einen Profilabschnitt (130) zur Befestigung einer Innenraumverkleidung des Freizeitfahrzeugs (110), eines Zubehörteils, der Dachplatte (180) oder einer Querversteifung der Dachplatte (180) aufweist.

9. Versteifungsstruktur (100) nach Anspruch 8,
**dadurch gekennzeichnet, dass**
der Profilabschnitt (130) zur Befestigung einer Innenraumverkleidung des Freizeitfahrzeugs (110), eines Zubehörteils, der Dachplatte (180) oder einer Querversteifung der Dachplatte (180) ein C-Profil (131) aufweist.

10. Versteifungsstruktur (100) nach Anspruch 7 sowie einem der Ansprüche 8 oder 9, **dadurch gekennzeichnet, dass**
der Profilabschnitt (130) zur Befestigung einer Innenraumverkleidung des Freizeitfahrzeugs, eines Zubehörteils, der Dachplatte (180) oder einer Querversteifung der Dachplatte (180) bei bestimmungsgemäßem Gebrauch der Versteifungsstruktur (100) unterhalb des kammerartigen Profilabschnitts (128) angeordnet ist.

11. Versteifungsstruktur (100) nach Anspruch 7 oder 10,
**dadurch gekennzeichnet, dass**
der kammerartige Profilabschnitt (128) des Basiselement (124) bei bestimmungsgemäßem Gebrauch der Versteifungsstruktur (100) an einer Oberseite (133) eine Nut (134) zur Aufnahme eines Kederprofil (135) aufweist.

12. Versteifungsstruktur (100) nach dem vorangegangenen Anspruch,
**dadurch gekennzeichnet, dass**
das Profil (120) zur Befestigung an der Längsseite (172) der Karosserie (170) und/ oder zur Befestigung an der Dachplatte (180) gebogen ist.

13. Versteifungsstruktur (100) nach einem der Ansprüche 1 bis 3 oder 6 bis 12,
**dadurch gekennzeichnet, dass**
an der Unterseite (153) des zweiten kammerartigen Profilabschnitts (152) des ersten Befestigungselements (150) mindestens eine Ausnehmung (155) zur Herstellung einer formschlüssigen Verbindung mit der Karosserie (170) des Freizeitfahrzeugs (110) angeordnet ist.

14. Versteifungsstruktur (100) nach einem der Ansprüche 1 bis 3 oder 6 bis 13,
**dadurch gekennzeichnet, dass**
das zweite Befestigungselement (160) einen dritten kammerartigen Profilabschnitt (162) aufweist, in welchem nach teilweiser Entfernung einer Kammerwandung des dritten kammerartigen Profilabschnitts (162) die Dachplatte (180) befestigbar ist.

15. Versteifungsstruktur (100) nach einem der vorangegangenen Ansprüche,
ferner aufweisend:
ein zweites Profil (220), welches spiegelsymmetrisch zum Profil (120) angefertigt ist, wobei das Profil (120) und das zweite Profil (220) zu einer Ebene spiegelsymmetrisch sind, welche von der Fahrtrichtung (110) und einer vertikal verlaufenden Hochachse (113) aufgespannt wird.

16. Freizeitfahrzeug (110) mit einer Versteifungsstruktur (100) nach einem der Ansprüche 1 bis 15.

## Claims

1. A stiffening structure (100) for a pop-up roof of a recreational vehicle (110), having a profile (120) for mounting to a long side (172) of a bodywork (170) and for mounting to a roof panel (180), the profile (120) having:
a first mounting means (150) for mounting to the long side (172) of the bodywork (170); and
a second mounting means (160) for mounting to the roof panel (180), wherein the second mounting means (160) is attached to the profile (120) at a position (122) opposite the first mounting means (150),
**characterized in that**
the first mounting means (150) has a second chamber-like profile section (152), the underside (153) of which is designed and adapted such that it can be attached to the bodywork (170), in particular by adhesive bonding.

2. The stiffening structure (100) according to claim 1,
**characterized in that**
the profile (120) has a base element (124),
wherein the first mounting means (150) is arranged or mounted to an exterior (125) of the base element (124) and the second mounting means (160) is arranged or mounted on an inside (126) of the base element (124).

3. The stiffening structure (100) according to any one of the preceding claims, **characterized in that**
the second mounting means (160) is arranged above the first mounting means (150) when used as intended.

4. A stiffening structure (100) for a pop-up roof of a recreational vehicle (110), having a profile (120) for mounting to a long side (172) of a bodywork (170) and for mounting to a roof panel (180), the profile (120) having a first mounting means (150) for mounting to the long side (172) of the bodywork (170), **characterized in that**
the profile (120) is connected to a corner connector (190) for connecting the stiffening structure (100) to a roof plate (180) running parallel to the transverse direction (112) of the recreational vehicle (110), by inserting the corner connector into hollow profiles of the profile, preferably by means of at least three opposing surfaces of hollow profiles holding an insertion section of the corner connector, most preferred closed hollow profiles.

5. The stiffening structure (100) according to claim 4,
**characterized in that**
the profile (120) has a base element (124),
wherein the first mounting means (150) is arranged or mounted to an exterior (125) of the base element (124).

6. A stiffening structure (100) having the features of any one of claims 1 to 3 and having the features of any one of claims 4 or 5.

7. The stiffening structure (100) according to any one of the claims 2, 3, 5 or 6 **characterized in that**
the base element (124) has a chamber-like profile section (128) which is designed such that it can be mounted at a longitudinal end of the stiffening structure (100) to a further component, in particular a spoiler (195), which in particular runs parallel to the transverse direction (112) of the recreational vehicle.

8. The Stiffening structure (100) according to any one of the claims 2, 3, 5, 6 or 7, **characterized in that**
the base element (124) has a profile section (130) for mounting an interior trim of the recreational vehicle (110), an accessory, the roof panel (180) or a transverse stiffening of the roof panel (180).

9. The stiffening structure (100) according to claim 8,
**characterized in that**
the profile section (130) for mounting an interior trim of the recreational vehicle (110), an accessory, the roof panel (180) or a transverse stiffening of the roof panel (180) has a C-profile (131).

10. The stiffening structure (100) according to claim 7 and any one of the claims 8 or 9,
**characterized in that**
the profile section (130) for mounting an interior trim of the recreational vehicle, an accessory, the roof panel (180) or a transverse stiffening of the roof panel (180) is arranged, when the stiffening structure (100) is used as intended, below the chamber-like profile section (128).

11. The stiffening structure (100) according to claim 7 or 10,
**characterized in that**
the chamber-like profile section (128) of the base element (124), when the stiffening structure (100) is used as intended, has a groove (134) on an upper side (133) for receiving a piping profile (135).

12. The stiffening structure (100) according to the preceding claim,
**characterized in that**
the profile (120) is bent for mounting to the long side (172) of the bodywork (170) and/or for mounting to the roof panel (180).

13. The stiffening structure (100) according to any one of the claims 1 to 3 or 6 to 12,
**characterized in that**
at least one recess (155) is arranged on the underside (153) of the second chamber-like profile section (152) of the first mounting means (150) for establishing a form-fitting connection with the bodywork (170) of the recreational vehicle (110).

14. The stiffening structure (100) according to any one of the claims 1 to 3 or 6 to 13,
**characterized in that**
the second mounting means (160) comprises a third chamber-like profile section (162) in which, after partial removal of a chamber wall of the third chamber-like profile section (162), the roof panel (180) can be mounted.

15. The Stiffening structure (100) according to any one of the preceding claims, further comprising:
a second profile (220), which is made mirror-symmetrical to the profile (120),
wherein the profile (120) and the second profile (220) are mirror-symmetrical to a plane which is spanned by the direction of travel (110) and a vertically running vertical axis (113).

16. A recreational vehicle (110) comprising a stiffening structure (100) according to any one of the claims 1 to 15.

## Revendications

1. Structure de renforcement (100) pour un toit relevable d'un véhicule de loisirs (110) comprenant un profilé (120) pour une fixation au niveau d'un côté longitudinal (172) d'une carrosserie (170) et pour une fixation au niveau d'une plaque de toit (180), dans laquelle le profilé (120) présente :
un premier élément de fixation (150) pour une fixation au niveau du côté longitudinal (172) de la carrosserie (170) ; et
un second élément de fixation (160) pour une fixation au niveau de la plaque de toit (180),
dans laquelle le second élément de fixation (160) est fixé au niveau du profilé (120) à une position opposée (122) au premier élément de fixation (150),
**caractérisée en ce que**
le premier élément de fixation (150) présente une deuxième section de profilé en forme de chambre (150), dont le côté inférieur (153) est conçu et configuré de telle sorte qu'elle peut être fixée, en particulier collée, au niveau de la carrosserie (170).

2. Structure de renforcement (100) selon la revendication 1,
**caractérisée en ce que**
le profilé (120) présente un élément de base (124),
dans laquelle le premier élément de fixation (150) est agencé ou fixé au niveau d'un côté extérieur (125) de l'élément de base (124) et le second élément de fixation (160), au niveau d'un côté intérieur (126) de l'élément de base (124).

3. Structure de renforcement (100) selon l'une quelconque des revendications précédentes,
**caractérisée en ce que**
le second élément de fixation (160) est agencé, en cas d'utilisation conforme à l'usage prévu, au-dessus du premier élément de fixation (150).

4. Structure de renforcement (100) pour un toit relevable d'un véhicule de loisirs (110) comprenant un profilé (120) pour une fixation au niveau d'un côté longitudinal (172) d'une carrosserie (170) et pour une fixation au niveau d'une plaque de toit (180), dans laquelle le profilé (120) présente un premier élément de fixation (150) pour une fixation au niveau du côté longitudinal (172) de la carrosserie (170),
**caractérisée en ce que**
le profilé (120) est connecté avec un raccord d'angle (190) pour une connexion de la structure de renforcement (100) à une plaque de toit (180) s'étendant parallèlement à la direction transversale (112) du véhicule de loisirs (110), par insertion du raccord d'angle dans des profilés creux du profilé, de préférence des profilés creux tenant, par au moins trois surfaces opposées, une section d'insertion du raccord d'angle, de toute préférence des profilés creux fermés.

5. Structure de renforcement (100) selon la revendication 4,
**caractérisée en ce que**
le profilé (120) présente un élément de base (124),
dans laquelle le premier élément de fixation (150) est agencé ou fixé au niveau d'un côté extérieur (125) de l'élément de base (124).

6. Structure de renforcement (100) comprenant les caractéristiques de l'une quelconque des revendications 1 à 3 et les caractéristiques de l'une quelconque des revendications 4 ou 5.

7. Structure de renforcement (100) selon l'une quelconque des revendications 2, 3, 5 ou 6,
**caractérisée en ce que**
l'élément de base (124) présente une section de profilé en forme de chambre (128), réalisée de telle sorte qu'elle peut être fixée, au niveau d'une extrémité longitudinale de la structure de renforcement (100), à un autre composant, en particulier un becquet (195), qui s'étend en particulier parallèlement à la direction transversale (112) du véhicule de loisirs.

8. Structure de renforcement (100) selon l'une quelconque des revendications 2, 3, 5, 6 ou 7,
**caractérisée en ce que**
l'élément de base (124) présente une section de profilé (130) pour une fixation d'un habillage d'intérieur du véhicule de loisirs (110), d'un accessoire, de la plaque de toit (180) ou d'un renforcement transversal de la plaque de toit (180).

9. Structure de renforcement (100) selon la revendication 8,
**caractérisée en ce que**
la section de profilé (130) pour une fixation d'un habillage d'intérieur du véhicule de loisirs (110), d'un accessoire, de la plaque de toit (180) ou d'un renforcement transversal de la plaque de toit (180) présente un profilé en C (131).

10. Structure de renforcement (100) selon la revendication 7 et l'une quelconque des revendications 8 ou 9,
**caractérisée en ce que**
la section de profilé (130) pour une fixation d'un habillage d'intérieur du véhicule de loisirs (110), d'un accessoire, de la plaque de toit (180) ou d'un renforcement transversal de la plaque de toit (180) est agencée, en cas d'utilisation conforme à l'usage prévu de la structure de renforcement (100), en dessous de la section de profilé en forme de chambre (128).

11. Structure de renforcement (100) selon la revendication 7 ou 10,
**caractérisée en ce que**
la section de profilé en forme de chambre (128) de l'élément de base (124), en cas d'utilisation conforme à l'usage prévu de la structure de renforcement (100), présente, au niveau d'un côté supérieur (133), une rainure (134) pour recevoir un profilé à gorge (135).

12. Structure de renforcement (100) selon la revendication précédente, **caractérisée en ce que**
le profilé (120) pour une fixation au niveau du longitudinal (172) de la carrosserie (170) et/ou pour une fixation à la plaque de toit (180) est incurvé.

13. Structure de renforcement (100) selon l'une quelconque des revendications 1 à 3 ou 6 à 12,
**caractérisée en ce que**
au moins un évidement (155) est agencé, au niveau du côté inférieur (153) de la deuxième section de profilé en forme de chambre (152) du premier élément de fixation (150), pour réaliser une connexion par coopération de forme avec la carrosserie (170) du véhicule de loisirs (110).

14. Structure de renforcement (100) selon l'une quelconque des revendications 1 à 3 ou 6 à 13,
**caractérisée en ce que**
le second élément de fixation (160) présente une troisième section de profilé en forme de chambre (162), dans laquelle, après retrait partiel d'une paroi de chambre de la troisième section de profilé en forme de chambre (162), la plaque de toit (180) peut être fixée.

15. Structure de renforcement (100) selon l'une quelconque des revendications précédentes,
présentant en outre :
un second profil (220) qui est fabriqué par symétrie de réflexion par rapport au profil (120), le profil (120) et le second profil (220) présentant une symétrie de réflexion par rapport à un plan qui s'étend depuis la direction d'avance (110) et un axe vertical (113).

16. Véhicule de loisirs (110) comprenant une structure de renforcement (100) selon l'une quelconque des revendications 1 à 15.
